# EUROPEAN PATENT SPECIFICATION

(11) **EP 1 988 695 B1**
(45) Date of publication and mention of the grant of the patent: **08.04.2009**
(21) Application number: 07107386.0
(22) Date of filing: 02.05.2007
(51) Int. Cl.: H04M 3/42

(54) **System and method for multi-channel blocking**
System und Verfahren für mehrkanalige Blockierung
Système et méthode pour blocage à multiples canaux

(30) Priority: 01.05.2007 US 742610
(43) Date of publication of application: 05.11.2008
(73) Proprietor: Research In Motion Limited, Waterloo, Ontario N2L 3W8 (CA); Research in Motion Corporation, Wilmington DE 19801 (US); Research in Motion UK Limited, Egham TW20 9LF (GB); Ascendent Systems Inc., Redwood City CA 94065 (US)
(72) Inventor: Castell, William David, Waterloo N2L 5P3 (CA); Alfano, Nicholas, Stratford-Upon-Avon CV37 7LG (GB); McDonald, Ian James, Waterloo, Ontario N2L4N7 (CA); Asthana, Atul, Unionville, Ontario L3R 2Y1 (CA); Heit, David Lloyd, Waterloo, Ontario N2V 2K2 (CA); Gisby, Douglas Michael, Atlanta, GA 30350 (US); George, Richard, Waterloo, Ontario N2T 2S3 (CA); Bakker, Jan (John-Luc), Flemington, NJ 08822 (US)
(74) Representative: Rickard, David John

(56) References cited:
- EP-A- 1 511 250
- WO-A-91/07838
- WO-A-20/06127302
- US-A1- 2004 218 743

## Description

The present disclosure relates generally to communications with devices capable of receiving traffic over multiple channels, and in particular, to wireless communications involving traffic such as email, SMS/MSS, VOIP, voice calls, among others.

Users of mobile devices or mobile user equipment are increasingly becoming more sophisticated in terms of the functionality that they require from their mobile devices. In response, manufacturers of handheld devices have created devices that are capable of transmitting data and/or voice. Such devices are becoming common in the marketplace and are referred to as Smart phones, personal digital assistance (PDAs) or the like.

Smart phones or similar mobile devices typically have multiple communication channels on which a user can be reached. This communication is over a wireless or cellular network and could involve circuit switched and/or packet switched communications. Examples of such communications include voice over a circuit switched channel, short message service/multimedia message service (SMS/MMS), email, instant messaging (IM), voice over internet protocol (VOIP), among others. As used herein, the term "mobile device" is a device capable of communicating on at least two communication channels.

While mobile devices facilitate communications, in some instances, a user may not want to be disturbed. At the same time, the user may not want to turn off the device or the radio, if the radio is capable of being turned off independently from the mobile device. For example, a user may wish to have the capability of sending outgoing messages while not receiving incoming messages.

Prior art devices allow for a user to select a notification profile that does not provide any audio or tactile notification of an incoming communication. However, these communications are still processed and the communication is then stored on the mobile device. For example, an incoming voice call may be directed to a user's voice mail, incoming emails will be directed into the user's email box, among others. This may be undesirable.

For example situations exist in which a mobile device could be involuntarily contacted by either an individual, or through an automated system that would be initiating and transmitting traffic in the form of email, SMS/MMS, IM, VOIP or voice to a mobile device. The traffic could be a one-time event, but could also be a repetitive transaction from an unwanted source. The solution of choosing a silent notification profile does not stop the incoming traffic to the mobile device.

An alternative is to block incoming communications. However, blocking is currently limited to a specific communication type. For example, blocking exists in instant messaging in which a user may selectively block a user or users, or may universally block instant messaging. However, this does not prevent communications from being received on other channels.

EP1511250 discloses a system wherein incoming calls and/or messages are managed by applying, upon receipt of a call and/or message, a pre-defined filter rule for handling the communication in accordance with the activated availability status of the recipient. US2004/218743 discloses a system for screening telephone calls. WO2006/127302 discloses a system for permitting different treatment of calls from different callers.

The present system and method may allow for the blocking of all incoming traffic over all designated communication channels enabled on a mobile device. Unlike the utilization of notification profiles, which do not stop traffic but only alter notification mechanisms, the present system and method allow a user to block all incoming traffic across all possible communication channels.

In a further embodiment, the blocking could be utilized for only selected source originators of traffic. Thus, blocking could occur where source identifiers could be specified to allow the system to detect and block incoming traffic. Such source identifiers could be correlated to multiple communication channels and further, in one embodiment, an address book could be used to correlate a source identifier with source identifiers for other communication channels.

The blocking could occur for a designated time period. This could, for example, be a temporary block for a certain time duration, a permanent block which would exist until a user manually removed the block, a scheduled block in which a user blocked traffic during a specific time period, among others.

The blocking could be done on a per-communication channel basis. Thus, a user could select to block certain communication channels but to allow communications over other communication channels.

The blocking could be done on the mobile device, a server, or a combination of the mobile device and the server. As used herein, a "server" includes switches, routers, and proxies as well as application servers.

The blocking could further be done based on an information technology (IT) policy. Specifically, an IT policy could be used to create a blocking filter and the blocking filter could then be pushed to mobile devices and/or servers to implement the policy.

The present disclosure therefore may provide a method for multi-channel blocking comprising the steps of: creating a block filter to block a plurality of communication channels to a mobile device; communicating the block filter to a blocking element; and executing the blocking filter at the blocking element; wherein the creating step selectively incorporates communications received from a source identifier into the block filter.

The present disclosure may further provide a system for multi-channeling blocking comprising: at least one server; a mobile device, the mobile device adapted to receive communications over multiple communications channels from the at least one server, the mobile device comprising means for creating a block filter to block a plurality of communication channels to a mobile device; and a communication subsystem adapted to communicate the block filter to one or both of the mobile device and the server; wherein the one or both of the mobile device and the server are further adapted to execute the blocking filter; and wherein the means for creating is adapted to selectively incorporate communications received from a source identifier into the block filter.

The present disclosure may further provide a mobile device for use in multi-channel blocking, the mobile device adapted to receive communications over multiple communications channels from the at least one server, the mobile device comprising means for creating a block filter to block a plurality of communication channels to a mobile device; and a communication subsystem adapted to communicate the block filter to a block filter recipient; wherein the block filter recipient is adapted to execute the blocking filter; and wherein the means for creating is adapted to selectively incorporate communications received from a source identifier into the block filter.

### BRIEF DESCRIPTION OF THE DRAWINGS

The present disclosure will be better understood with reference to the drawings in which:
**Figure 1** is a flow diagram illustrating the process of creating and executing a blocking filter;
**Figure 2** is a display of an exemplary blocking menu;
**Figure 3** is a display of an exemplary time sub-menu for blocking functionality;
**Figure 4** is an exemplary sub-menu for channel selection associated with blocking;
**Figure 5** is a flow diagram illustrating blocking functionality on a mobile device;
**Figure 6** is a flow diagram illustrating blocking functionality on a server; and
**Figure 7** is a block diagram of an exemplary mobile device capable of being used with the present system and method.

### DESCRIPTION OF PREFERRED EMBODIMENTS

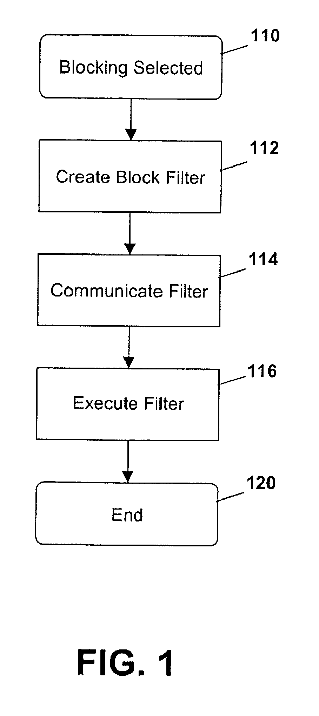

Reference is now made to **Figure 1. Figure 1** shows a simplified flow chart illustrating a method for blocking incoming traffic over communication channels. A pre-condition **110** to the method of **Figure 1** is that a block function has been selected by a user or otherwise enabled on the mobile device. As will be appreciated, the block functionality can be selected by various means and the present disclosure is not limited to how the block functionality is selected.

In one example, a block functionality of the present disclosure can be selected through a dedicated menu allowing a user to choose blocking options. In an alternative, a blocking function may be selected through a function menu associated with a specific communication, such as an email. An email that has been received from an undesired source may have a function associated with it that would allow a user to block communications from that source. Similarly, a voice call may include a call display or a call history on a mobile device that may provide an option to block communications from that source. Other means of accessing blocking functionality would be apparent to those skilled in the art.

Further, blocking could be provisioned in a mobile device or could be part a corporate information technology (IT) policy.

The process of **Figure 1** proceeds to step **112** in which a block filter is created. The filter that is created in step **112** is dependent on how the blocking functionality was created and various options are described in detail below.

From step **112,** once a block filter is created, the block filter is then communicated to a blocking element in step **114.** The blocking element can the back end of the mobile device or an external network element, such as a server, as is explained in more detail below. As will be appreciated by those skilled in the art, "communicated" could involve external communications from a mobile device to a server, internal communications within a mobile device itself, or communications from a separate entity such as the IT department of an enterprise to a mobile device or a server.

From step **114,** the process proceeds to step **116** in which the recipient of the communication from step **114** executes the filter. The process then ends at step **120.**

Each of the steps in **Figure 1** is described in more detail below.

### Universal Blocking

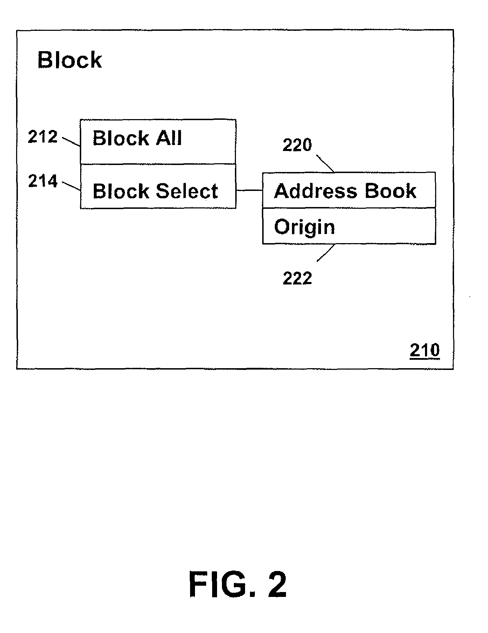

In a first embodiment, the present system and method allows for the blocking of all incoming traffic over all designated communication channels enabled on a mobile device. Referring to **Figure 2****,** this could be implemented through the exemplary menu illustrated. As will be appreciated by those skilled in the art, the menu illustrated in **Figure 2** is merely meant as an example and is not meant to limit the scope of the present disclosure. Other menus would be evident to those skilled in the art.

Blocking menu **210** of **Figure 2** includes a menu selection option **212** that would allow a user to "block all".

If the user selects the "block all" option **212,** then the method of **Figure 1** is initiated. Specifically, referring again to **Figure 1****,** the process proceeds to step **112** in which a block filter is created. In this case, the block filter is to block all incoming communications. The process then proceeds to step **114** in which the filter to block all incoming communications is communicated to the mobile device, the server, or both.

As will be appreciated by those skilled in the art, one implementation is to merely filter the incoming communications on the mobile device. If the block filter was created on the mobile device, the communications of step **114** are internal within the device, such as from the application creating the filter to the back end of the mobile device. Thus the method can be implemented entirely on a mobile device.

Another option is to filter the incoming communications at the server. An advantage of filtering incoming communications at the server is that network resources are preserved and battery life of the mobile device is preserved by not having undesirable communications communicated to the mobile device. However, one problem with filtering at a server is that multiple communication channels may not all proceed through the same server. For example, a server may only be a data server and only packet switched communications may communicate through the data server. Thus, if a user wishes to filter all communications, then circuit switched communications may be missed if the blocking is merely communicated and implemented at the server.

A third option is a hybrid solution in which blocking occurs both at the mobile device and at the server. Thus, if a server is only a data server, it may block the data elements but the circuit switched elements may still proceed through to the mobile device. In this case, the mobile device will also have a filter which will catch the circuit switched communications and prevent them from being processed.

Further, the mobile device may not know which communications the server will and will not be able to block and thus step **114** may communicate to both the device, through internal communications, and the server through external communications, thereby ensuring that any communications that a server does not handle but are received by the device are filtered.

As will be appreciated, any of the above three options can also be utilized if the filter is not created at the device. The filter could be created by a separate entity such as an enterprise IT department or a carrier, and communicated in step **114** to the mobile device, the server, or both the mobile device and the server.

In step **116** the mobile device and/or server execute the filter that was created in step **112** and the process then ends at step **120.**

### Selective Blocking

In a further embodiment, the system and method for multi-channel blocking could be user operated and so configured that the blocking would only be valid for selected source originators of traffic. Referring again to **Figure 2****,** a "block select" menu item **214** could be selected by a user. Further, sub menu items **220** and **222** could allow a user to specify blocking from an address book or from an origin respectively. Again, these are merely examples and are not meant to be limiting.

An example of the above is that a user does not want to receive any communications from John Smith who is in the user's address book. The user could go through blocking menu **210** to select block select menu item **214.** The user then could scroll through the address book or find John Smith through some other means.

As will be appreciated, address books in many mobile devices are sophisticated and include not only the name and telephone number of a particular individual, but also include other contact information. For example, the address book selection for John Smith could include John Smith's home telephone number, work telephone number, mobile number, email address and instant messaging profile.

Once the user selects John Smith, then the process proceeds through the steps of **Figure 1****.** Specifically, at step **112** a block filter is created for John Smith. In this case, the block filter could include all of John Smith's telephone numbers, email addresses and instant messaging profile from the example above. It will be appreciated by those skilled in the art that this is merely an example and various other information could be included.

Further, various information could be cross-referenced to other information. Specifically, an SMS profile is often the same as the phone number and thus SMS blocking could also occur based on the phone number.

The block filter of step **112** would include all of the communication channels that are found for the selected user in the address book or could be derived based on information from the address book.

As with the universal blocking implementation above, this filter is then communicated to either the mobile device, the server or both in step **114** and at step **116,** either the mobile device, the server or both execute the filter. The process then ends at step **120.**

Similarly, if an origin is selected from menu item **222,** the user could specify a source identifier to block. Thus, from the example above, John Smith may not be in the address book and the user may be prompted to input an email address, telephone number or the like. Other information could be used for selective blocking such as a URL domain, telephone area code or various other identifiers that would be apparent to those skilled in the art. A user may be prompted to input one or more identifiers.

### Time

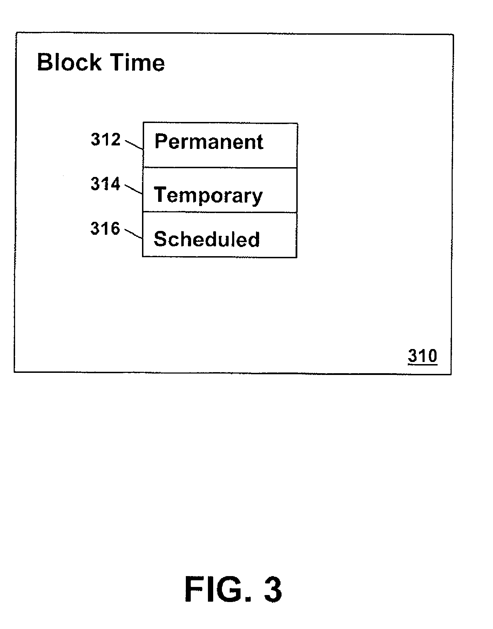

In a further embodiment, a time duration for blocking could be specified by a user. Referring to **Figure 3****,** once a user has selected to either universally block or selectively block communications, the user may be prompted with a time menu item **310.** Options could include a permanent blocking menu selection **312,** a temporary blocking menu selection **314** or a scheduled blocking menu item **316.** The above is only meant to be an example and other time blocking configurations form part of the present disclosure.

Permanent blocking menu item **312** could specify that a user wants to block the selected communications permanently. The blocking would then be in effect until a user removed the blocking from those communications.

The selection of the temporary blocking menu item **314** could lead to further options where a user could specify the time duration for the blocking. The time durations could, for example, include a preset end time or a time interval for which the blocking should be in effect. Thus, the user could indicate that the blocking should be in effect for two hours and 10 minutes or could specify that the blocking should end at 5:15 p.m.

From both menu items **312** and **314,** the blocking will take effect immediately.

A third option is a scheduled blocking. For example, if John Smith from above, is a non-business contact, then a user may wish to block incoming communications from John Smith during business hours. Thus, scheduled menu item **316** could indicate that communications from John Smith should be blocked from 9 a.m. to 5 p.m. Further, scheduled blocking could be periodic or a one time event. For example, if the user is in a meeting from 2 to 4, then the scheduled blocking could be to block all communications between 2 and 4 p.m.
Alternatively, with the example above of the non-business contact, the blocking could be periodic, such as every weekday from 9 to 5 p.m.

Again, the above is only meant as an example and other time-based solutions will be apparent to those skilled in the art.

Further, time functionality could be incorporated through other means than a menu **310.** For example, the time based blocking could be implemented by a separate entity from the mobile device and communicated to the mobile device and/or server.

The time functionality is incorporated into the block filter of step **112** of **Figure 1****.** Thus, the blocking could indicate the time duration that the blocking should occur for. When the filter is executed at step **116,** the mobile device or the server will note the time duration for which the blocking should occur. Alternatively, this functionality could be implemented on the mobile device or server alone and a unblock message could be sent to the server once the blocking should end.

### Selective Channel Blocking

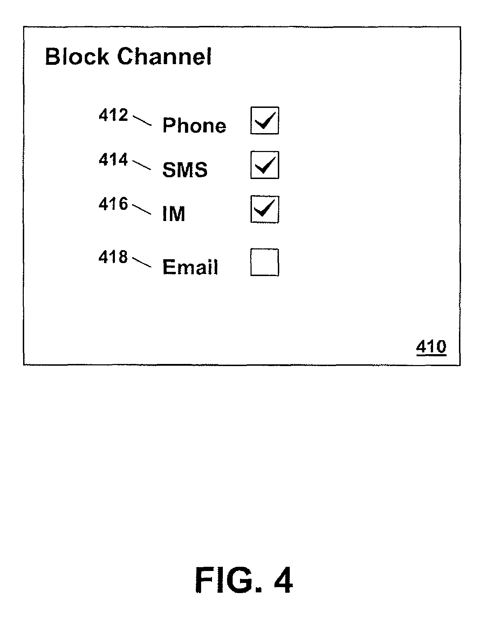

A further combination with any of the above is selective channel blocking. Referring to **Figure 4****,** a mobile device could know which communications channels it is capable of communicating over and thus create a communications channel menu **410.** The communications channel menu could include a selection option such as a check box to indicate which channels are desired to be blocked. Thus, for example, a user may wish to block all communications but for email and thus could select the phone option **412,** the SMS option **414,** the instant messaging option **416** but leave the email option **418** blank. Again, this is only an example and the menu items could include other communications channels and the implementation of which channel is selected could be performed in a variety of ways. Further, if selective channel blocking is not implemented on the mobile device, the menu of **Figure 4** would not be required to create the selective channel blocking filter.

The channel selection could occur for either universal blocking or selective blocking. For universal blocking, the menu of **Figure 4** could include all communications channels the mobile device is capable of communicating over. With selective blocking, all communications channels could be shown or, if an address book only contains information about various channels, then only those channels could be shown in the menu. Thus, if John Smith only had his phone numbers but no email address, the menu could show only a phone and an SMS option, for example.

### Blocking functionality

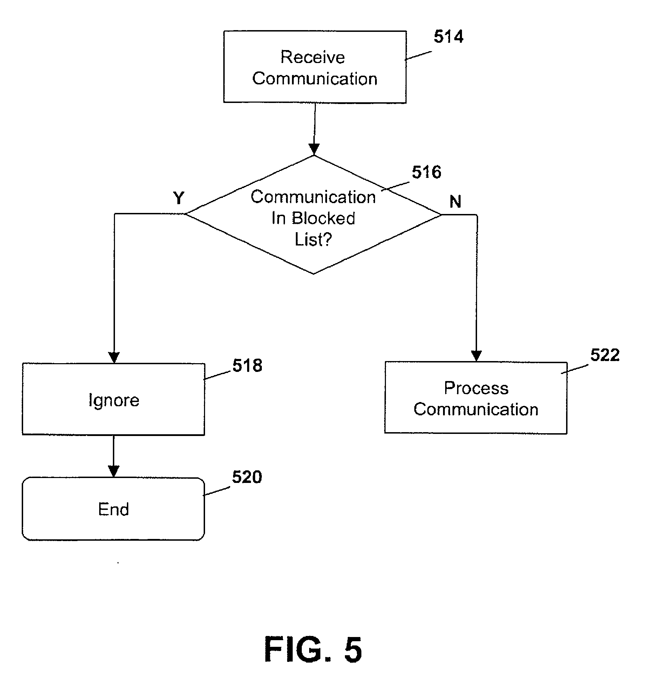

Reference is now made to **Figure 5. Figure 5** shows mobile device side functionality for blocking communications.

In step **514,** a mobile device receives a communication.

The process then proceeds to step **516** in which the mobile device checks to see whether the source of the incoming communication is within the communication filter that has been previously executed on the mobile device.

If yes, the process proceeds from step **516** to step **518** in which the communication is ignored and the process then ends at step **520.**

If the communication source is not in the filter, the process proceeds to step **522** in which the mobile device processes the communication and proceeds as it would ordinarily with a received communication.

As will be appreciated by those skilled in the art, by ignoring the communication at step **516,** before any processing of the communication has occurred, the user is never notified of the communication, the communication is never entered into any records database, and thus from the user's perspective, it is as if the communication never existed.

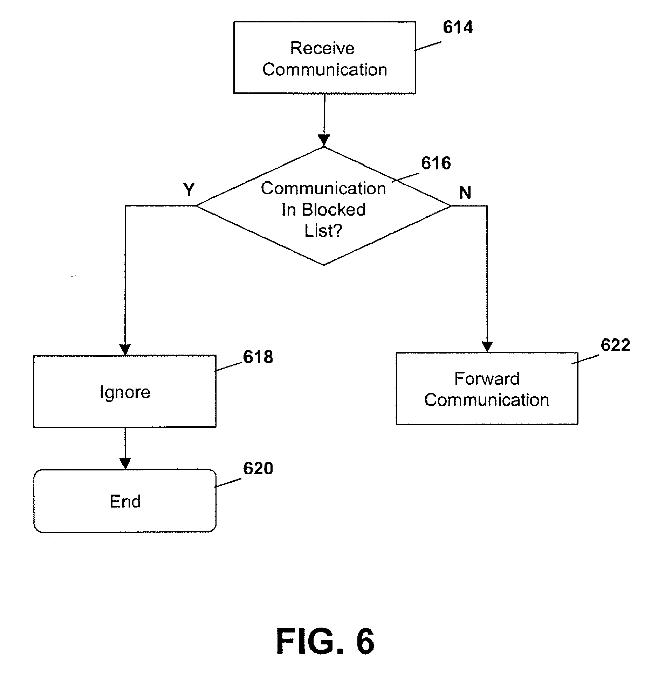

Reference is now made to **Figure 6. Figure 6** shows the server side process for handling incoming communications. On the server, a communication is received at step **614** and the process proceeds to step **616** in which the server checks to see whether the communication is in a filtered list that has been previously executed on the server.

If yes, the process proceeds to step **618** in which the communication is ignored and the process then proceeds to step **620** in which the process ends.

Conversely, if in step **616** it is found that the communication is not in a filtered list, then the process proceeds to step **622** in which the communication is forwarded to a mobile device through the ordinary process of forwarding communications.

As will be appreciated by those skilled in the art, by ignoring communications destined for a mobile device that come from a source on a filtered list, network resources and device battery resources are saved. Specifically, these blocked communications are never sent over the air and thus network bandwidth is not utilized for unwanted communications and further, the mobile device does not need to process the incoming communication, thereby saving battery resources.

Various communications may be received through a server for the process of **Figure 6****.** For example, the server could be a network node through which all data communications are processed. In this case, communications such as instant messages, emails, voice over Internet protocol telephone calls will be processed through the server and blocked at step **616** and **618.** The server could also be a circuit switched server that could block voice calls and SMS messages. Further, the server could serve both functionalities. For example, if the phone message is received through a private branch exchange (PBX) that is associated with the server.

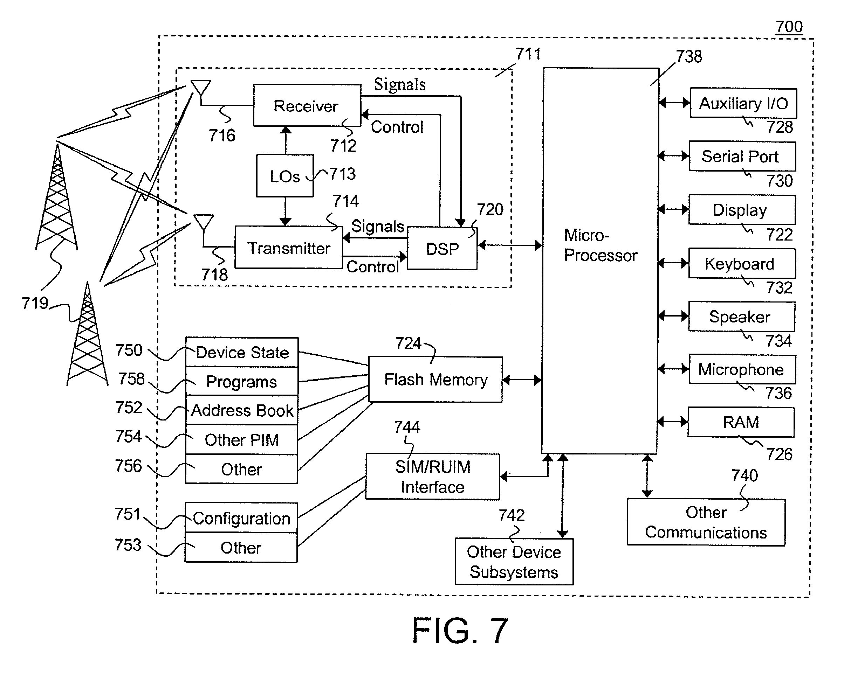

The method and system above could be implemented on any mobile device having two or more communications channels. An exemplary mobile device is illustrated in **Figure 7****.**

**Figure 7** is a block diagram illustrating a mobile device apt to be used with preferred embodiments of the apparatus and method of the present disclosure. Mobile device **700** is a two-way wireless communication device preferably having voice and data communication capabilities. Depending on the exact functionality provided, the wireless device may be referred to as a data messaging device, a smart phone, a two-way pager, a wireless e-mail device, a cellular telephone with data messaging capabilities, a wireless Internet appliance, or a data communication device, as examples.

Where mobile device **700** is enabled for two-way communication, it will incorporate a communication subsystem **711,** including both a receiver **712** and a transmitter **714,** as well as associated components such as one or more, preferably embedded or internal, antenna elements **716** and **718,** local oscillators (LOs) **713,** and a processing module such as a digital signal processor (DSP) **720.** As will be apparent to those skilled in the field of communications, the particular design of the communication subsystem **711** will be dependent upon the communication network in which the device is intended to operate.

Network access requirements will also vary depending upon the type of network **719.** In some CDMA networks network access is associated with a subscriber or user of mobile device **700.** A CDMA mobile device may require a removable user identity module (RUIM) or a subscriber identity module (SIM) card in order to operate on a CDMA network. The SIM/RUIM interface **744** is normally similar to a card-slot into which a SIM/RUIM card can be inserted and ejected like a diskette or PCMCIA card. The SIM/RUIM card can have approximately 64K of memory and hold many key configuration **751,** and other information **753** such as identification, and subscriber related information.

When required network registration or activation procedures have been completed, mobile device **700** may send and receive communication signals over the network **719.** As illustrated in **Figure 7****,** network **719** can consist of multiple base stations communicating with the mobile device. For example, in a hybrid CDMA 1x EVDO system, a CDMA base station and an EVDO base station communicate with the mobile device and the mobile device is connected to both simultaneously. The EVDO and CDMA 1x base stations use different paging slots to communicate with the mobile device.

Signals received by antenna **716** through communication network **719** are input to receiver **712,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **720.** In a similar manner, signals to be transmitted are processed, including modulation and encoding for example, by DSP **720** and input to transmitter **714** for digital to analog conversion, frequency up conversion, filtering, amplification and transmission over the communication network **719** via antenna **718.** DSP **720** not only processes communication signals, but also provides for receiver and transmitter control. For example, the gains applied to communication signals in receiver **712** and transmitter **714** may be adaptively controlled through automatic gain control algorithms implemented in DSP **720.**

Mobile device **700** preferably includes a microprocessor **738** which controls the overall operation of the device. Communication functions, including at least data and voice communications, are performed through communication subsystem **711.** Microprocessor **738** also interacts with further device subsystems such as the display **722,** flash memory **724,** random access memory (RAM) **726,** auxiliary input/output (I/O) subsystems **728,** serial port **730,** one or more keyboards or keypads **732,** speaker **734,** microphone **736,** other communication subsystem **740** such as a short-range communications subsystem and any other device subsystems generally designated as **742.** Serial port **730** could include a USB port or other port known to those in the art.

Some of the subsystems shown in **Figure 7** perform communication-related functions, whereas other subsystems may provide "resident" or on-device functions. Notably, some subsystems, such as keyboard **732** and display **722,** for example, may be used for both communication-related functions, such as entering a text message for transmission over a communication network, and device-resident functions such as a calculator or task list.

Operating system software used by the microprocessor **738** is preferably stored in a persistent store such as flash memory **724,** which may instead be a read-only memory (ROM) or similar storage element (not shown). Those skilled in the art will appreciate that the operating system, specific device applications, or parts thereof, may be temporarily loaded into a volatile memory such as RAM **726.** Received communication signals may also be stored in RAM **726.**

As shown, flash memory **724** can be segregated into different areas for both computer programs **758** and program data storage **750, 752, 754** and **756.** These different storage types indicate that each program can allocate a portion of flash memory **724** for their own data storage requirements. Microprocessor **738,** in addition to its operating system functions, preferably enables execution of software applications on the mobile device. A predetermined set of applications that control basic operations, including at least data and voice communication applications for example, will normally be installed on mobile device **700** during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **719.** In a preferred embodiment, the PIM data items are seamlessly integrated, synchronized and updated, via the wireless network **719,** with the mobile device user's corresponding data items stored or associated with a host computer system. Further applications may also be loaded onto the mobile device **700** through the network **719,** an auxiliary I/O subsystem **728,** serial port **730,** short-range communications subsystem **740** or any other suitable subsystem **742,** and installed by a user in the RAM **726** or preferably a non-volatile store (not shown) for execution by the microprocessor **738.** Such flexibility in application installation increases the functionality of the device and may provide enhanced on-device functions, communication-related functions, or both. For example, secure communication applications may enable electronic commerce functions and other such financial transactions to be performed using the mobile device **700.**

In a data communication mode, a received signal such as a text message or web page download will be processed by the communication subsystem **711** and input to the microprocessor **738.** Filtering of the communication may be done within communications subsystem **711** or by microprocessor **738.** If not filtered, microprocessor **738** preferably further processes the received signal for output to the display **722,** or alternatively to an auxiliary I/O device **728.**

A user of mobile device **700** may also compose data items such as email messages for example, using the keyboard **732,** which is preferably a complete alphanumeric keyboard or telephone-type keypad, in conjunction with the display **722** and possibly an auxiliary I/O device **728.** Such composed items may then be transmitted over a communication network through the communication subsystem **711.**

For voice communications, overall operation of mobile device **700** is similar, except that received signals would preferably be output to a speaker **734** and signals for transmission would be generated by a microphone **736.** Alternative voice or audio I/O subsystems, such as a voice message recording subsystem, may also be implemented on mobile device **700.** Although voice or audio signal output is preferably accomplished primarily through the speaker **734,** display **722** may also be used to provide an indication of the identity of a calling party, the duration of a voice call, or other voice call related information for example.

Serial port **730** in **Figure 7** would normally be implemented in a personal digital assistant (PDA)-type mobile device for which synchronization with a user's desktop computer (not shown) may be desirable, but is an optional device component. Such a port **730** would enable a user to set preferences through an external device or software application and would extend the capabilities of mobile device **700** by providing for information or software downloads to mobile device **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem.

Other communications subsystems **740,** such as a short-range communications subsystem, is a further optional component which may provide for communication between mobile device **700** and different systems or devices, which need not necessarily be similar devices. For example, the subsystem **740** may include an infrared device and associated circuits and components or a Bluetooth™ communication module to provide for communication with similarly enabled systems and devices.

Communications subsystems **711** and **740,** as well as internal communications on mobile device **700** are herein referred to as communications means.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for multi-channel blocking comprising the steps of:
creating (112) a block filter to block a plurality of communication channels to a mobile device (700);
communicating (114) the block filter to a blocking element;
executing (116) the blocking filter at the blocking element; and
wherein the creating step (112) selectively incorporates communications received from a source identifier into the block filter.

2. The method of claim 1, wherein the creating step (112) incorporates all communications channels of a mobile device (700) into the block filter.

3. The method of claim 1, wherein the creating step (112) further comprises looking up the source identifier in an address book and adding communications received from source identifiers correlated to the source identifier within the address book.

4. The method of claim 1, wherein the source identifier is received by prompting a user.

5. The method of any one of claims 1 to 4, wherein a source identifier for a first communications channel is correlated to a source identifier for a second communications channel.

6. The method of any one of claims 1 to 5, wherein the creating step (112) further incorporates a time into the block filter.

7. The method of claim 6, wherein the time is chosen from a permanent block (312), a temporary block (314) or a scheduled block (316).

8. The method of claim 7, wherein the temporary block (314) is chosen from a time duration or a fixed end time.

9. The method of claim 7, wherein the scheduled block (316) is recurring.

10. The method of any one of claims 1 to 9, wherein the creating step (112) further incorporates a communications channel selection from a user to create the block filter.

11. The method of any one of claims 1 to 10, further comprising, after the executing step (116), ignoring communications having a source identifier within the block filter.

12. The method of any one of claim 1 to 11, wherein the blocking element is a mobile device (700) and/or a server.

13. The method of claim 12, wherein the executing step (116) is performed on the the mobile device (700) and/or the server receiving the block filter from the communicating step (114).

14. The method of claim 1, wherein the creating step (112) is done by a separate entity from a mobile device (700) and a server.

15. The method of claim 14, wherein the separate entity utilizes an information technology policy to create the blocking filter.

16. A system for multi-channel blocking comprising:
at least one server;
a mobile device (700), the mobile device adapted to receive communications over multiple communications channels from the at least one server, the mobile device (700) having:
means (738) for creating a block filter to block a plurality of communication channels to a mobile device;
communication means (711) adapted to communicate the block filter to the mobile device and/or the server;
wherein the mobile device (700) and/or the server are further adapted to execute the blocking filter; and
wherein the means (738) for creating is adapted to selectively incorporate communications received from a source identifier into the block filter.

17. The system of claim 16, wherein the means (738) for creating is adapted to incorporate all communications channels of a mobile device into the block filter.

18. The system of claim 16, wherein the means (738) for creating is adapted to look up the source identifier in an address book and add communications received from source identifiers correlated to the source identifier within the address book.

19. The system of claim 16, further comprising input means to receive the source identifier.

20. The system of any one of claims 16 to 19, wherein a source identifier for a first communications channel is correlated to a source identifier for a second communications channel.

21. The system of any one of claims 16 to 20, wherein the means (738) for creating is further adapted to incorporate a time into the block filter.

22. The system of claim 21, wherein the time is chosen from a permanent block (312), a temporary block (314) or a scheduled block (316).

23. The system of claim 22, wherein the temporary block (314) is chosen from a time duration or a fixed end time.

24. The system of claim 22, wherein the scheduled block (316) is recurring.

25. The system of any one of claims 16 to 24, wherein the means (738) for creating is further adapted to incorporate a communications channel selection from a user to create the block filter.

26. The system of any one of claims 16 to 25, further comprising means for ignoring communications having a source identifier within the block filter.

27. The system of any one of claims 16 to 26, further comprising a separate entity adapted to create the block filter and communicate the block filter to the mobile device and/or the server.

28. A mobile device (700) for use in multi-channel blocking, the mobile device adapted to receive communications over multiple communications channels, the mobile device (700) having:
means (738) for creating a block filter to block a plurality of communication channels to a mobile device;
communication means (711) adapted to communicate the block filter to a block filter recipient;
means (738) to execute the blocking filter; and
wherein the means (738) for creating is adapted to selectively incorporate communications received from a source identifier into the block filter.

29. The mobile device (700) of claim 28, wherein the means (738) for creating is adapted to incorporate all communications channels of the mobile device (700) into the block filter.

30. The mobile device (700) of claim 28, wherein the means (738) for creating is adapted to look up the source identifier in an address book and add communications received from source identifiers correlated to the source identifier within the address book.

31. The mobile device (700) of claim 28, further comprising input means to receive the source identifier.

32. The mobile device (700) of any one of claims 28 to 31, wherein a source identifier for a first communications channel is correlated to a source identifier for a second communications channel.

33. The mobile device (700) of any one of claims 28 to 32, wherein the means (738) for creating is further adapted to incorporate a time into the block filter.

34. The mobile device (700) of claim 33, wherein the time is chosen from a permanent block (312), a temporary block (314) or a scheduled block (316).

35. The mobile device (700) of claim 34, wherein the temporary block (314) is chosen from a time duration or a fixed end time.

36. The mobile device (700) of claim 34, wherein the scheduled block (316) is recurring.

37. The mobile device (700) of any one of claims 28 to 36, wherein the means (738) for creating is further adapted to incorporate a communications channel selection from a user to create the block filter.

38. The mobile device (700) of any one of claims 28 to 37, further comprising means for ignoring communications having a source identifier within the block filter.

39. The mobile device (700) of any one of claims 28 to 38, wherein the block filter recipient is the mobile device (700) and/or a server.

40. A computer readable medium (724, 726) storing computer readable code executable by a processor (738) of a computing device (700) for causing said computing device (700) to perform the steps of the method of any one of claims 1 to 15.

## Patentansprüche

1. Verfahren für mehrkanalige Blockierung, umfassend die folgenden Schritte:
das Erstellen (112) eines Blockierungsfilters zum Blockieren einer Vielzahl von Kommunikationskanälen zu einem Mobilgerät (700);
das Kommunizieren (114) des Blockierungsfilters zu einem Blockierungselement;
das Ausführen (116) des Blockierungsfilters an dem Blockierungselement; und
wobei der Schritt des Erstellens (112) Kommunikationen, die von einer Ursprungskennung empfangen wurden, selektiv in den Blockierungsfilter aufnimmt.

2. Verfahren gemäß Anspruch 1, wobei der Schritt des Erstellens (112) alle Kommunikationskanäle eines Mobilgeräts (700) in den Blockierungsfilter aufnimmt.

3. Verfahren gemäß Anspruch 1, wobei der Schritt des Erstellens (112) des Weiteren das Aufsuchen der Ursprungskennung in einem Adressbuch und das Hinzufügen der Kommunikationen umfasst, die von Ursprungskennungen empfangen wurden, welche mit der Ursprungskennung innerhalb des Adressbuchs korrelieren.

4. Verfahren gemäß Anspruch 1, wobei die Ursprungskennung empfangen wird, indem ein Benutzer abgefragt wird.

5. Verfahren gemäß einem der Ansprüche 1 bis 4, wobei eine Ursprungskennung für einen ersten Kommunikationskanal mit einer Ursprungskennung für einen zweiten Kommunikationskanal korreliert.

6. Verfahren gemäß einem der Ansprüche 1 bis 5, wobei der Schritt des Erstellens (112) des Weiteren eine Zeit in den Blockierungsfilter aufnimmt.

7. Verfahren gemäß Anspruch 6, wobei die Zeit aus einer permanenten Blockierung (312), einer temporären Blockierung (314) oder einer geplanten Blockierung (316) ausgewählt wird.

8. Verfahren gemäß Anspruch 7, wobei die temporäre Blockierung (314) aus einer Zeitdauer oder aus einer feststehenden Endzeit ausgewählt wird.

9. Verfahren gemäß Anspruch 7, wobei die geplante Blockierung (316) wiederkehrend ist.

10. Verfahren gemäß einem der Ansprüche 1 bis 9, wobei der Schritt des Erstellens (112) des Weiteren eine Kommunikationskanalauswahl von einem Benutzer zur Erstellung des Blockierungsfilters aufnimmt.

11. Verfahren gemäß einem der Ansprüche 1 bis 10, des Weiteren umfassend, nach dem Schritt des Ausführens (116), das Ignorieren von Kommunikationen, die eine Ursprungskennung innerhalb des Blockierungsfilters haben.

12. Verfahren gemäß einem der Ansprüche 1 bis 11, wobei das Blockierungselement ein Mobilgerät (700) und/oder ein Server ist.

13. Verfahren gemäß Anspruch 12, wobei der Schritt des Ausführens (116) auf dem Mobilgerät (700) und/oder dem Server durchgeführt wird, das bzw. der den Blockierungsfilter aus dem Schritt des Kommunizierens (114) empfängt.

14. Verfahren gemäß Anspruch 1, wobei der Schritt des Erstellens (112) durch eine von einem Mobilgerät (700) und einem Server getrennte Entität durchgeführt wird.

15. Verfahren gemäß Anspruch 14, wobei die getrennte Entität eine Informationstechnik-Richtlinie zum Erstellen des Blockierungsfilters verwendet.

16. System für mehrkanalige Blockierung, umfassend:
mindestens einen Server;
ein Mobilgerät (700), wobei das Mobilgerät zum Empfangen von Kommunikationen über mehrere Kommunikationskanäle von dem mindestens einen Server eingerichtet ist, wobei das Mobilgerät (700) aufweist:
Mittel (738) zum Erstellen eines Blockierungsfilters zum Blockieren einer Vielzahl von Kommunikationskanälen zu einem Mobilgerät;
Kommunikationsmittel (711), die zum Kommunizieren des Blockierungsfilters zu dem Mobilgerät und/oder dem Server eingerichtet sind;
wobei das Mobilgerät (700) und/oder der Server des Weiteren zum Ausführen des Blockierungsfilters eingerichtet sind; und
wobei die Mittel (738) zum Erstellen dazu eingerichtet sind, Kommunikationen, die von einer Ursprungskennung empfangen wurden, selektiv in den Blockierungsfilter aufzunehmen.

17. System gemäß Anspruch 16, wobei die Mittel (738) zum Erstellen dazu eingerichtet sind, alle Kommunikationskanäle eines Mobilgeräts in den Blockierungsfilter aufzunehmen.

18. System gemäß Anspruch 16, wobei die Mittel (738) zum Erstellen dazu eingerichtet sind, die Ursprungskennung in einem Adressbuch aufzusuchen und die Kommunikationen hinzuzufügen, die von Ursprungskennungen empfangen wurden, welche mit der Ursprungskennung innerhalb des Adressbuchs korrelieren.

19. System gemäß Anspruch 16, des Weiteren umfassend Eingabemittel zum Empfangen der Ursprungskennung.

20. System gemäß einem der Ansprüche 16 bis 19, wobei eine Ursprungskennung für einen ersten Kommunikationskanal mit einer Ursprungskennung für einen zweiten Kommunikationskanal korreliert.

21. System gemäß einem der Ansprüche 16 bis 20, wobei die Mittel (738) zum Erstellen des Weiteren dazu eingerichtet sind, eine Zeit in den Blockierungsfilter aufzunehmen.

22. System gemäß Anspruch 21, wobei die Zeit aus einer permanenten Blockierung (312), einer temporären Blockierung (314) oder einer geplanten Blockierung (316) ausgewählt wird.

23. System gemäß Anspruch 22, wobei die temporäre Blockierung (314) aus einer Zeitdauer oder aus einer feststehenden Endzeit ausgewählt wird.

24. System gemäß Anspruch 22, wobei die geplante Blockierung (316) wiederkehrend ist.

25. System gemäß einem der Ansprüche 16 bis 24, wobei die Mittel (738) zum Erstellen des Weiteren dazu eingerichtet sind, eine Kommunikationskanalauswahl von einem Benutzer zur Erstellung des Blockierungsfilters aufzunehmen.

26. Verfahren gemäß einem der Ansprüche 16 bis 25, des Weiteren umfassend Mittel zum Ignorieren von Kommunikationen, die eine Ursprungskennung innerhalb des Blockierungsfilters haben.

27. System gemäß einem der Ansprüche 16 bis 26, des Weiteren umfassend eine getrennte Entität, die dazu eingerichtet ist, den Blockierungsfilter zu erstellen und den Blockierungsfilter zu dem Mobilgerät und/oder dem Server zu kommunizieren.

28. Mobilgerät (700) zur Verwendung bei der mehrkanaligen Blockierung, wobei das Mobilgerät zum Empfangen von Kommunikationen über mehrere Kommunikationskanäle eingerichtet ist, wobei das Mobilgerät (700) aufweist:
Mittel (738) zum Erstellen eines Blockierungsfilters zum Blockieren einer Vielzahl von Kommunikationskanälen zu einem Mobilgerät;
Kommunikationsmittel (711), die zum Kommunizieren des Blockierungsfilters zu einem Blockierungsfilter-Empfänger eingerichtet sind;
Mittel (738) zum Ausführen des Blockierungsfilters; und
wobei die Mittel (738) zum Erstellen dazu eingerichtet sind, Kommunikationen, die von einer Ursprungskennung empfangen wurden, selektiv in den Blockierungsfilter aufzunehmen.

29. Mobilgerät (700) gemäß Anspruch 28, wobei die Mittel (738) zum Erstellen dazu eingerichtet sind, alle Kommunikationskanäle des Mobilgeräts (700) in den Blockierungsfilter aufzunehmen.

30. Mobilgerät (700) gemäß Anspruch 28, wobei die Mittel (738) zum Erstellen dazu eingerichtet sind, die Ursprungskennung in einem Adressbuch aufzusuchen und die Kommunikationen hinzuzufügen, die von Ursprungskennungen empfangen wurden, welche mit der Ursprungskennung innerhalb des Adressbuchs korrelieren.

31. Mobilgerät (700) gemäß Anspruch 28, des Weiteren umfassend Eingabemittel zum Empfangen der Ursprungskennung.

32. Mobilgerät (700) gemäß einem der Ansprüche 28 bis 31, wobei eine Ursprungskennung für einen ersten Kommunikationskanal mit einer Ursprungskennung für einen zweiten Kommunikationskanal korreliert.

33. Mobilgerät (700) gemäß einem der Ansprüche 28 bis 32, wobei die Mittel (738) zum Erstellen des Weiteren dazu eingerichtet sind, eine Zeit in den Blockierungsfilter aufzunehmen.

34. Mobilgerät (700) gemäß Anspruch 33, wobei die Zeit aus einer permanenten Blockierung (312), einer temporären Blockierung (314) oder einer geplanten Blockierung (316) ausgewählt wird.

35. Mobilgerät (700) gemäß Anspruch 34, wobei die temporäre Blockierung (314) aus einer Zeitdauer oder aus einer feststehenden Endzeit ausgewählt wird.

36. Mobilgerät (700) gemäß Anspruch 34, wobei die geplante Blockierung (316) wiederkehrend ist.

37. Mobilgerät (700) gemäß einem der Ansprüche 28 bis 36, wobei die Mittel (738) zum Erstellen des Weiteren dazu eingerichtet sind, eine Kommunikationskanalauswahl von einem Benutzer zur Erstellung des Blockierungsfilters aufzunehmen.

38. Mobilgerät (700) gemäß einem der Ansprüche 28 bis 37, des Weiteren umfassend Mittel zum Ignorieren von Kommunikationen, die eine Ursprungskennung innerhalb des Blockierungsfilters haben.

39. Mobilgerät (700) gemäß einem der Ansprüche 28 bis 38, wobei der Blockierungsfilter-Empfänger das Mobilgerät (700) und/oder ein Server ist.

40. Computerlesbares Medium (724, 726) mit darauf gespeichertem computerlesbarem Programmcode, der durch einen Prozessor (738) eines Computergeräts (700) ausgeführt werden kann, um zu bewirken, dass das Computergerät (700) die Schritte des Verfahrens gemäß einem der Ansprüche 1 bis 15 durchführt.

## Revendications

1. Un procédé de blocage multicanal comportant les étapes visant à :
créer (112) un filtre de blocage pour bloquer une pluralité de canaux de communication vers un dispositif mobile (700) ;
communiquer (114) le filtre de blocage à un élément de blocage ;
exécuter (116) le filtre de blocage au niveau de l'élément de blocage ; et
dans lequel l'étape de création (112) incorpore de façon sélective les communications reçues d'un identifiant source dans le filtre de blocage.

2. Le procédé de la revendication 1, dans lequel l'étape de création (112) incorpore tous les canaux de communication d'un dispositif mobile (700) dans le filtre de blocage.

3. Le procédé de la revendication 1, dans lequel l'étape de création (112) comporte de plus la recherche de l'identifiant source dans un carnet d'adresses et l'ajout des communications reçues des identifiants sources corrélés à l'identifiant source dans le carnet d'adresses.

4. Le procédé de la revendication 1, dans lequel l'identifiant source est reçu en invitant un utilisateur.

5. Le procédé de n'importe laquelle des revendications 1 à 4, dans lequel un identifiant source pour un premier canal de communication est corrélé à un identifiant source pour un deuxième canal de communication.

6. Le procédé de n'importe laquelle des revendications 1 à 5, dans lequel l'étape de création (112) incorpore de plus un temps dans le filtre de blocage.

7. Le procédé de la revendication 6, dans lequel le temps est choisi parmi un blocage permanent (312), un blocage temporaire (314) ou un blocage programmé (316).

8. Le procédé de la revendication 7, dans lequel le blocage temporaire (314) est choisi parmi une durée ou un moment de fin fixe.

9. Le procédé de la revendication 7, dans lequel le blocage programmé (316) est récurrent.

10. Le procédé de n'importe laquelle des revendications 1 à 9, dans lequel l'étape de création (112) incorpore de plus une sélection de canaux de communication de la part d'un utilisateur pour créer le filtre de blocage.

11. Le procédé de n'importe laquelle des revendications 1 à 10, comportant de plus, après l'étape d'exécution (116), l'étape visant à ignorer les communications ayant un identifiant source dans le filtre de blocage.

12. Le procédé de n'importe laquelle des revendications 1 à 11, dans lequel l'élément de blocage est un dispositif mobile (700) et/ou un serveur.

13. Le procédé de la revendication 12, dans lequel l'étape d'exécution (116) est réalisée sur le dispositif mobile (700) et/ou le serveur recevant le filtre de blocage de l'étape de communication (114).

14. Le procédé de la revendication 1, dans lequel l'étape de création (112) est effectuée par une entité distincte d'un dispositif mobile (700) et d'un serveur.

15. Le procédé de la revendication 14, dans lequel l'entité distincte utilise une politique informatique pour créer le filtre de blocage.

16. Un système de blocage multicanal comportant :
au moins un serveur ;
un dispositif mobile (700), le dispositif mobile étant adapté pour recevoir des communications sur des canaux de communication multiples de l'au moins un serveur, le dispositif mobile (700) ayant :
des moyens (738) pour créer un filtre de blocage afin de bloquer une pluralité de canaux de communication vers un dispositif mobile ;
des moyens de communication (711) adaptés pour communiquer le filtre de blocage au dispositif mobile et/ou au serveur ;
dans lequel le dispositif mobile (700) et/ou le serveur sont de plus adaptés pour exécuter le filtre de blocage ; et
dans lequel les moyens (738) pour créer sont adaptés pour incorporer de façon sélective les communications reçues d'un identifiant source dans le filtre de blocage.

17. Le système de la revendication 16, dans lequel les moyens (738) pour créer sont adaptés pour incorporer tous les canaux de communication d'un dispositif mobile dans le filtre de blocage.

18. Le système de la revendication 16, dans lequel les moyens (738) pour créer sont adaptés pour chercher l'identifiant source dans un carnet d'adresses et ajouter les communications reçues des identifiants sources corrélés à l'identifiant source dans le carnet d'adresses.

19. Le système de la revendication 16, comportant de plus des moyens d'entrée pour recevoir l'identifiant source.

20. Le système de n'importe laquelle des revendications 16 à 19, dans lequel un identifiant source pour un premier canal de communication est corrélé à un identifiant source pour un deuxième canal de communication.

21. Le système de n'importe laquelle des revendications 16 à 20, dans lequel les moyens (738) pour créer sont de plus adaptés pour incorporer un temps dans le filtre de blocage.

22. Le système de la revendication 21, dans lequel le temps est choisi parmi un blocage permanent (312), un blocage temporaire (314) ou un blocage programmé (316).

23. Le système de la revendication 22, dans lequel le blocage temporaire (314) est choisi parmi une durée ou un moment de fin fixe.

24. Le système de la revendication 22, dans lequel le blocage programmé (316) est récurrent.

25. Le système de n'importe laquelle des revendications 16 à 24, dans lequel les moyens (738) pour créer sont de plus adaptés pour incorporer une sélection de canaux de communication de la part d'un utilisateur afin de créer le filtre de blocage.

26. Le procédé de n'importe laquelle des revendications 16 à 25, comportant de plus des moyens pour ignorer les communications ayant un identifiant source dans le filtre de blocage.

27. Le système de n'importe laquelle des revendications 16 à 26, comportant de plus une entité distincte adaptée pour créer le filtre de blocage et communiquer le filtre de blocage au dispositif mobile et/ou au serveur.

28. Un dispositif mobile (700) pour une utilisation de blocage multicanal, le dispositif mobile étant adapté pour recevoir des communications sur des canaux de communication multiples, le dispositif mobile (700) ayant :
des moyens (738) pour créer un filtre de blocage afin de bloquer une pluralité de canaux de communication vers un dispositif mobile ;
des moyens de communication (711) adaptés pour communiquer le filtre de blocage à un destinataire de filtre de blocage ;
des moyens (738) pour exécuter le filtre de blocage ; et
dans lequel les moyens (738) pour créer sont adaptés pour incorporer de façon sélective les communications reçues d'un identifiant source dans le filtre de blocage.

29. Le dispositif mobile (700) de la revendication 28, dans lequel les moyens (738) pour créer sont adaptés pour incorporer tous les canaux de communication du dispositif mobile (700) dans le filtre de blocage.

30. Le dispositif mobile (700) de la revendication 28, dans lequel les moyens (738) pour créer sont adaptés pour chercher l'identifiant source dans un carnet d'adresses et ajouter les communications reçues des identifiants sources corrélés à l'identifiant source dans le carnet d'adresses.

31. Le dispositif mobile (700) de la revendication 28, comportant de plus des moyens d'entrée pour recevoir l'identifiant source.

32. Le dispositif mobile (700) de n'importe laquelle des revendications 28 à 31, dans lequel un identifiant source pour un premier canal de communication est corrélé à un identifiant source pour un deuxième canal de communication.

33. Le dispositif mobile (700) de n'importe laquelle des revendications 28 à 32, dans lequel les moyens (738) pour créer sont de plus adaptés pour incorporer un temps dans le filtre de blocage.

34. Le dispositif mobile (700) de la revendication 33, dans lequel le temps est choisi parmi un blocage permanent (312), un blocage temporaire (314) ou un blocage programmé (316).

35. Le dispositif mobile (700) de la revendication 34, dans lequel le blocage temporaire (314) est choisi parmi une durée ou un moment de fin fixe.

36. Le dispositif mobile (700) de la revendication 34, dans lequel le blocage programmé (316) est récurrent.

37. Le dispositif mobile (700) de n'importe laquelle des revendications 28 à 36, dans lequel les moyens (738) pour créer sont de plus adaptés pour incorporer une sélection de canaux de communication de la part d'un utilisateur afin de créer le filtre de blocage.

38. Le dispositif mobile (700) de n'importe laquelle des revendications 28 à 37, comportant de plus des moyens pour ignorer les communications ayant un identifiant source dans le filtre de blocage.

39. Le dispositif mobile (700) de n'importe laquelle des revendications 28 à 38, dans lequel le destinataire de filtre de blocage est le dispositif mobile (700) et/ou un serveur.

40. Un support lisible par ordinateur (724, 726) stockant un code lisible par ordinateur exécutable par un processeur (738) d'un dispositif informatique (700) pour amener ledit dispositif informatique (700) à réaliser les étapes du procédé de n'importe laquelle des revendications 1 à 15.
